Europäisches Patentamt

**European Patent Office**

**Office européen des brevets**

(19)

(11) Publication number: **0 118 405**
A2

# EUROPEAN PATENT APPLICATION

(21) Application number: **84850053.4**

(22) Date of filing: **15.02.84**

(51) Int. Cl.³: **C 08 G 18/38**
**C 08 G 18/30, C 08 G 18/66**

(30) Priority: **03.03.83 SE 8301171**

(43) Date of publication of application:
**12.09.84 Bulletin 84/37**

(84) Designated Contracting States:
**AT DE FR GB NL**

(71) Applicant: **EKA AB**
**Fack**
**S-445 01 Surte 1(SE)**

(72) Inventor: **Holmberg, Krister**
**Dalgängsgatan 17**
**S-431 39 Mölndal(SE)**

(72) Inventor: **Johansson, Jan-Allan**
**Rägäkern 11**
**S-417 26 Göteborg(SE)**

(72) Inventor: **Carlson, Dennis**
**Utmarksvägen 9**
**S-433 70 Partille(SE)**

(74) Representative: **Wiklund, Erik et al,**
**AWAPATENT AB Box 5117**
**S-200 71 Malmö(SE)**

(54) Polyol-alkali metal silicate emulsion of low water content, and a process for the production thereof.

(57) A process for the production of a polyol-alkali metal silicate emulsion of low water content is described. The emulsion is intended primarily for the production of polyurethane plastics. The emulsion is obtained by mixing a composition which comprises

(a) 19-65% by weight, preferably 40-60% by weight, of aqueous alkali metal silicate solution, having a water content of 40-62% by weight, preferably 50-60% by weight;

(b) 34-80% by weight, preferably 40-60% by weight, of polyol; and

(c) 1-5% by weight, preferably 2-3% by weight, of an organic acid.

The water content of the emulsion is then reduced by evaporating the emulsion at a reduced pressure and at a temperature of 20-100°C, preferably 75-90°C, to a water content of 3-10% by weight, preferably 4-7% by weight. The evaporation time is up to 4 hours, preferably 2-3 hours.

EP 0 118 405 A2

## POLYOL-ALKALI METAL SILICATE EMULSION OF LOW WATER CONTENT, AND A PROCESS FOR THE PRODUCTION THEREOF

The present invention relates to a polyol-alkali metal silicate emulsion and a process for the production of such an emulsion having a reduced water content and intended for use in the production of solid and foamed polyurethane-silicate products.

Siliceous polyurethane products and processes for the production thereof are already known from, for example, DE OS 2,359,606, 2,359,609 and 2,359,610 as well as US P 4,072,637, 4,097,424, 4,153,764 and 4,159,369.

The siliceous component which generally is an aqueous solution of an alkali metal silicate, is introduced into the polyurethane composition by mixing the aqueous silicate solution with the polyol component, such that an emulsion of the silicate solution in the polyol is formed. The difficult point is to make the resulting emulsion stable because conventional surfactants do not function as stabilisers. It has been found, however, that some organic acids, in particlar adipic acid, will stabilise the emulsion, as has been disclosed in the European patent application 81850065.4, according to which the stabilised polyol-alkali metal silicate emulsion is produced by mixing the alkali metal silicate solution, the liquid polyol and the organic acid under agitation at a temperature between the ambient temperature and 100°C and at the ambient pressure for 10-60 minutes, whereupon the mixture is cooled under continued agitation so that the desired emulsion is obtained.

The stable polyol-alkali metal silicate emulsion may be used in the production of resinous and foamed polyurethane-silicate products. The polyol-alkali metal silicate emulsion may be used as the polyol component in polyurethane foaming machines. Polyol-alkali metal silicate emulsions which, if desired, may contain an amine catalyst, blowing agent and surfactant, are mixed with a polyisocyanate or an isocyanate-terminated polyurethane prepolymer and are caused to react, whereby a resinous or foamed polyurethane-silicate product is obtained. These products find many applications, such as heat and sound insulations, lightweight structural panels, and coating agents for wood, metal and plastic.

In the production of the polyol-alkali metal silicate emulsion according to the above-mentioned European patent application, the components are mixed preferably in the proportions 1-50 parts by weight of aqueous alkali metal silicate solution, 25 parts by weight of polyol, and 1-5% by weight of organic acid, based upon the total weight of the emulsion.

It has been found that a polyol-alkali metal silicate emulsion having approximately equal parts of polyol and silicate solution is optimal. If the content of alkali metal silicate solution is reduced, the flame protection of the final polyurethane product will deterioate, while a decreasing polyol content will deteriorate the mechanical characteristics of the polyurethane foam. The maximum dry content of the aqueous alkali metal silicate solution is about 60% by weight because higher dry contents will give viscosities which are too high. If equal parts of polyol and alkali metal silicate solution and a maximum dry content of 60% by weight of the silicate solution are used, the water content of the emulsion will be at least 20% by weight, and for many applications such a water content constitutes a serious disadvantage. Thus, in the production of polyurethane plastics, the water in the emulsion will react with the isocyanate in a strong exothermal reaction, and carbon dioxide is released. This again causes a high pressure in the mold in which the plastic is formed, and a high density gradient in the resulting polyurethane foam. Moreover, the cells of the foamed plastic will be filled with carbon dioxide instead of gas from the blowing agent that has been added, such as Freon, and this again results in an increased thermal conductivity of the foamed plastic.

As has been mentioned above, it is not possible in actual practice to obviate these problems by reducing the water content of the alkali metal silicate solution employed because the viscosity of the silicate solution is highly dependent upon the dry content. On the other hand, the present invention has surprisingly shown that it is possible to provide a solution of this problem by evaporating the finished emulsion to a lower water content. Great care should be exercised in driving off the water in the emulsion by evaporation in order to prevent a particle growth of the emulsion, i.e. an agglomeration of the alkali metal silicate droplets in the emulsion. Microscopic examination has shown that such carefully conducted evaporation if anything seems to reduce the droplet size in the emulsion during the driving-off of the water as a consequence of the water being removed from the droplets of alkali metal silicate solution. It must be regarded as remarkable that the emulsion is resistant to particle growth at elevated temperature, in spite of the fact that it lacks conventional surface tension-reducing stabilisers.

The present invention thus provides a process for the production of a polyol-alkali metal silicate emulsion having a low water content, in which process an emulsion is prepared by mixing a composition comprising

(a)    19-65% by weight, based upon the total weight of the emulsion, of an aqueous alkali metal silicate solution having a water content of 40-62% by weight, based upon the total weight of the alkali metal silicate solution;

(b)    34-80% by weight, based upon the total weight of the emulsion, of a polyol; and

(c)    1-5% by weight, based upon the total weight of the emulsion, of an organic acid;

4

the process being characterised in that the emulsion is evaporated at a reduced pressure and at a temperature of 20-100°C to a water content of 3-10% by weight.

The invention also comprises a polyol-alkali metal silicate emulsion having a low water content, said emulsion having been prepared in the manner described above.

Further features of the invention will appear from the sub-claims.

The invention will now be explained in more detail in the following description in which the percentages are by weight, unless otherwise indicated.

As has been stated above, the emulsion is prepared by mixing 19-65% by weight of aqueous alkali metal silicate solution, 34-80% by weight of polyol, and 1-5% by weight of organic acid. The preferred percentages of these components in the process according to the invention are 40-60% by weight of alkali metal silicate solution, 40-60% by weight of polyol, and 2-3% by weight of organic acid. The water content of the alkali metal silicate solution generally is 40-62% by weight, based upon the total weight of the solution, and preferably 50-60% by weight.

To counteract aggregation of the silicate particles of the emulsion during the evaporation treatment which should be conducted with great care, the evaporation is carried out at a reduced pressure. By reduced pressure is meant that the pressure is lower than the atmospheric pressure. Preferably, the pressure is about 0.1-25 kPa, and most preferred is about 0.1-13 kPa (1-100 mm Hg). The evaporation temperature may lie within the range 20-100°C, i.e. from the ambient temperature up to 100°C, but if a temperature of about 100°C is utilised, the treatment time must be very short. For the process of the invention, it is preferred to maintain the treatment temperature at a maximum of 90°C, thereby to reduce materially the risk that the silicate particles of the emulsion are aggregated to larger aggregates which are sedimented out. At a temperature of 90$^{O}$C or below, evaporation may be conducted for as long as 4 hours without aggregation taking place. A preferred temperature range is 50-90$^{O}$C, and the normal treatment time then is about 2-3 hours. The most preferred temperature range during evaporation is 75-90$^{O}$C. The evaporation is carried out until the emulsion has a water content of 3-10% by weight, preferably 4-7% by weight.

The starting materials that can be used in the production of the polyol-alkali metal silicate emulsion according to the invention are described in more detail below.

(a) Alkali metal silicate

Any suitable alkali metal silicate may be used, such as sodium, potassium and lithium silicates. As has been mentioned before, the alkali metal silicate is in the form of an aqueous solution containing 40-62% by weight, preferably 50-60% by weight, of alkali metal silicate.

(b) Polyol

Any suitable liquid polyol (organic polyhydroxyl compound) may be used in the context of the invention, especially compounds containing 2-8 hydroxyl groups, and especially those having a moleculare weight of about 400-6000, such as polyethers which contain at least 2, generally 2-8 hydroxyl groups.

The polyethers having at least 2, generally 2-8, and preferably 2 or 3 hydroxyl groups, which are used in the context of the invention are previously known and can be produced by, for example, polymerisation of epoxides, such as ethylene oxide, propylene oxide, butylene oxide, tetrahydrofurane oxide, styrene oxide or epichlorohydrin, each with itself, for example in the presence of BF$_3$, or by addition of these epoxides, optionally as mixtures or successively, to starting components containing reactive hydrogen atoms, such as alcohols or amines, for example glycerol; ethylene glycol; propylene-1,3- or -1,2-glycol; sorbitol; 4,4'-dihydroxydiphenyl propane, aniline, ammonia, ethanol amine or ethylene diamine; saccharose polyethers such as those described in, for example, DE-OS 1,175,358 and 1,064,938, may also be used in the context of this invention. Polyethers modified with vinyl polymers, such as those obtainable by polymerisation of styrene or acrylonitrile in the presence of polyethers (see US-P-3,383,351, 3,304,273, 3,523,093 and 3,110,695 as well as DE-P-1,152,536) and polybutadienes containing OH groups, may also be used.

Examples of these compounds which are used in the context of this invention are described in High Polymers, Volume XVI, "Polyurethane, Chemistry and Technology", published by Saunders-Frisch Interscience Publishers, New York, London, Volume I, 1962, pp. 32-42 and pp. 44-54, and Volume II, 1964, pp. 5 and 16 and pp. 198-199; and in Kunststoff-Handbuch, Volume VII, Vieweg-Hochtlen, Carl-Hanser-Verlag, München, 1966, pp. 45-71.

(c) Organic acid

Any suitable organic acid having up to 10 carbon atoms may be used in the context of this invention, such as aliphatic carboxylic acids, aliphatic acid anhydrides, aliphatic polycarboxylic acids, cycloaliphatic carboxylic acids, cycloaliphatic polycarboxylic acids, aromatic carboxylic acids, aromatic polycarboxylic acids, heterocyclic polycarboxylic acids, aliphatic carboxylic anhydrides, aromatic carboxylic anhydrides, and mixtures thereof. The organic acids may be substituted with, for example, halogen atoms, and may be unsaturated.

Examples of suitable aliphatic acids are, without being restricted thereto, formic acid, acetic acid, propionic acid, butyric acid, valeric acid, caproic acid.

An example of suitable aliphatic acid anhydrides is acetic anhydride, but is not limited thereto.

7

Examples of suitable aromatic acids, without being restricted thereto, are benzoic acid, para-aminobenzoic acid, salicylic acid, methyl salicylate, etc.

The polycarboxylic acid may be aliphatic, cycloaliphatic, aromatic and/or heterocyclic and may be substituted with, for example, halogen atoms, and may be unsaturated. Examples are: succinic acid, adipic acid, sebacic acid, suberic acid, azelaic acid, phthalic acid, phthalic anhydride, isophthalic acid, tetrahydrophthalic anhydride, trimellitic acid, hexahydrophthalic anhydride, tetrachlorophthalic anhydride, endomethylene tetrahydrophthalic anhydride, glutaric anhydride, fumaric acid, maleic acid, maleic anhydride.

Especially preferred are dicarboxylic acids having a low molecular weight, and at present adipic acid is the most preferred acid.

Besides the above-mentioned components, other components may be added in the production of the polyol-alkali metal silicate emulsion, especially when the emulsion is to be used for the production of foamed polyurethane silicate. Any suitable amine compound may be added, preferably in an amount of up to 5% by weight, based upon the weight of components (a), (b) and (c). Tertiary amines are preferred. Suitable tertiary amines include, but are not restricted to, triethyl amine, tributyl amine, triethylene diamine; N-methyl morpholine; N,N,N',N'-tetramethylene diamine; triethanol amine; N-methyl-diethanol amine and mixtures thereof.

Up to 0.5% by weight of organometallic compounds may be added to components (a), (b) and (c), based upon the weight of the said components, and preferably organic tin compounds, such as tin salts of carboxylic acid, such as tin acetate, tin octoate, tin ethyl hexoate, tin laurate and the dialkyl tin salts of carboxylic acids, such as dibutyl tin diacetate, dibutyl tin dilaurate, dibutyl tin maleate or dioctyl tin diacetate.

Up to 5% by weight, based upon the weight of components (a), (b) and (c), of a surface active additive (emulsifiers and foam stabilisers) may be added to components (a), (b) and (c). Suitable emulsifiers are, for example, the sodium salts of ricinoleic sulphonates or of fatty acids or salts of fatty acids with amines, for example oleic acid diethyl amine or stearic acid diethanol amine. Other surface active additives are alkali metal or ammonium salts of sulphonic acid, such as dodecyl benzene sulphonic acid or dinaphthyl methane disulphonic acid. Non-ionic surfactants, such as ethylene and propylene oxide adducts of alkyl phenols and fatty alcohols, may also be used. Hydrophilic polymers, such as polyvinyl alcohol and polyvinyl pyrrolidone, may sometimes be used as emulsion stabilisers. The foam stabilisers used mainly are water-soluble polyester siloxanes. Generally, these compounds have a polydimethyl siloxane group attached to a copolymer of ethylene oxide and propylene oxide. Foam stabilisers of this type have been described in US-P-3,629,308.

To further illustrate the invention, the following non-restrictive Examples are described in which all parts and percentages are by weight, unless otherwise indicated.

EXAMPLE 1

A polyol-silicate emulsion having a water content of 20% was prepared by mixing equal parts of a rigid foam polyol having a functionality of 4 and a silicate solution with an $SiO_2:Na_2O$ ratio of 2.0. The emulsification auxiliary was adipic acid in an amount of 2%.

The emulsion was used for the production of a rigid polyurethane foam of the following formulation:

| Component 1 | Parts |
|---|---|
| Polyol-silicate emulsion | 100 |
| Amine catalyst | 0.5 |
| Tin catalyst | 0.05 |
| Cell regulator (silicon) | 1.0 |
| Propellant (Freon) | 20 |

| Component 2 | Parts |
|---|---|
| MDI | 100 |

The resulting foam gave the following test values:

| | |
|---|---|
| Proportion of open cells (%) | 12 |
| $\lambda$ value (W/m.$^{\circ}$C) | 0.030 |
| Compression strength (N/mm$^2$) | 0.15 |
| Tensile strength (N/mm$^2$) | 0.21 |

EXAMPLE 2

The polyol-silicate emulsion according to Example 1 was evaporated for 3 hours at a temperature of 90$^{\circ}$C and a pressure of 20 kPa to a water content of 5%. For the production of polyurethane foam, the same formulation as in Example 1 was used, except that the MDI amount was raised from 100 to 120 parts.

The resulting foam gave the following test values:

| | |
|---|---|
| Proportion of open cells (%) | 6 |
| $\lambda$ value (W/m.$^{\circ}$C) | 0.019 |
| Compression strength (N/mm$^2$) | 0.20 |
| Tensile strength (N/mm$^2$) | 0.40 |

CLAIMS

1. A process for the production of a polyol-alkali metal silicate emulsion having a low water content, in which process an emulsion is prepared by mixing a composition comprising

(a)  19-65% by weight, based upon the total weight of the emulsion, of an aqueous alkali metal silicate solution having a water content of 40-62%, based upon the total weight of the alkali metal silicate solution;

(b)  34-80% by weight, based upon the total weight of the emulsion, of a polyol; and

(c)  1-5% by weight, based upon the total weight of the emulsion, of an organic acid,

c h a r a c t e r i s e d  in that the emulsion is evaporated at a reduced pressure and at a temperature of 20-100°C to a water content of 3-10% by weight.

2. A process as claimed in claim 1, c h a r a c - t e r i s e d  in that evaporation is carried out at a temperature of 50-90°C.

3. A process as claimed in claim 2, c h a r a c - t e r i s e d  in that evaporation is carried out at a temperature of 75-90°C.

4. A process as claimed in claim 1, c h a r a c - t e r i s e d  in that the emulsion is evaporated to a water content of 4-7% by weight.

5. A process as claimed in claim 1, c h a r a c - t e r i s e d  in that the emulsion is evaporated for up to 4 hours.

6. A process as claimed in claim 1, c h a r a c - t e r i s e d  in that the emulsion is obtained by mixing 40-60% by weight of component (a), 40-60% by weight of component (b) and 2-3% by weight of component (c).

11

7. A process as claimed in claim 1, c h a r a c - t e r i s e d  in that the alkali metal silicate is selected from the group consisting of sodium silicate, potassium silicate, lithium silicate, or mixtures thereof.

8. A process as claimed in claim 1, c h a r a c - t e r i s e d  in that the polyol is selected from the group consisting of polyvalent alcohols or polyethers having at least two hydroxyl groups, and mixtures thereof.

9. A process as claimed in claim 1, c h a r a c - t e r i s e d  in that the organic acid is adipic acid.

10. A polyol-alkali metal silicate emulsion having a low water content, c h a r a c t e r i s e d  in that it has been produced in accordance with the process stated in claim 1.